# EUROPÄISCHE PATENTSCHRIFT

(11) **EP 1 011 997 B1**
(45) Veröffentlichungstag und Bekanntmachung des Hinweises auf die Patenterteilung: **22.03.2006**
(21) Anmeldenummer: 99931250.7
(22) Anmeldetag: 05.07.1999
(51) Int. Cl.: B60J 10/10, B60J 10/00

(54) **DICHTUNGSSYSTEM FÜR DEN DACHRAHMEN EINES KRAFTFAHRZEUGS**
SEALING SYSTEM FOR THE ROOF FRAME OF A MOTOR VEHICLE
SYSTEME D'ETANCHEITE POUR RAIDISSEUR DE PAVILLON D'UN VEHICULE

(30) Priorität: 13.07.1998 DE 29812428 U
(43) Veröffentlichungstag der Anmeldung: 28.06.2000
(73) Patentinhaber: Meteor Gummiwerke K.H. Bädje GmbH & Co. KG, 31167 Bockenem (DE)
(72) Erfinder: BUCHHOLZ, Hans-Volker, D-31137 Hildesheim (DE)
(74) Vertreter: Sobisch, Peter
(86) Internationale Anmeldenummer: PCT/EP1999/004668
(87) Internationale Veröffentlichungsnummer: WO 2000/003885

(56) Entgegenhaltungen:
- EP-A- 0 524 447
- WO-A-97/25218
- DE-U- 29 509 880
- DE-U- 29 621 997
- US-A- 4 894 954

## Beschreibung

Die Erfindung betrifft ein Dichtungssystem nach dem Oberbegriff des Anspruchs 1.

Ein bekanntes Dichtungssystem dieser Art (DE 296 21 997 U1 der Anmelderin) bietet noch nicht genügend Freiheit zur optimalen Gestaltung des Profilstrangs.

Aus der DE 295 09 880 U1 der Anmelderin ist eine nicht längsgeteilte Trägerschiene bekannt. Eine einem Dachlenker zugewandte Fläche der Trägerschiene ist mit einer Elastomerschicht versehen. In eine konkave Seite des Dichtungsprofils ragt jeweils von einem Schenkel der Trägerschiene eine Dichtlippe eines einstückigen Elastomerprofilstrangs hinein.

Aus der DE 195 31 600 A1 ist eine nicht längsgeteilte, U-förmige Halteschiene an sich bekannt. An den Schenkeln der Halteschiene ist jeweils ein Dichtungsabschnitt festhaftend angebracht. Jeder Dichtungsabschnitt weist eine sich zur Fensterscheibe hin erstreckende Dichtlippe auf.

Aus der WO 97/25218 A1 ist ein Dichtungssystem bekannt, welches aus zwei, L-förmigen, aus einem thermoplastischen Kunststoff bestehenden Armierungsteilstücken zusammengesetzt ist, die durch ein gemeinsames Profilstrangteilstück untereinander in Verbindung stehen und zu einer U-förmigen Querschnittsgestalt komplettiert werden. Ein bodenseitiger Abschnitt des Profilstrangteilstücks ist zwischen den Armierungsteilstücken membranartig ausgeformt und bildet im zusammengesteckten Zustand der Armierungsteilstücke eine sich in den Querschnittsraum hineinerstreckende Faltung, an der der Umfangsbereich einer in den genannten Querschnittsraum einführbaren Scheibe dichtend anliegt. Das Profilstrangteilstück ist an seinen freien Enden mit Dichtungslippen versehen, die zur beidseitigen dichtenden Anlage an der Scheibe eingerichtet sind. Zur Befestigung dieses Dichtungssystems an einer Fahrzeugkarosserie sind seitliche, in das Profilstrangteilstück eingeformte Schlitze vorgesehen, die sich parallel zu den Seitenschenkeln der Querschnittsgestalt erstrecken und zur Verrastung mit zugeordneten Stegabschnitten einer Fahrzeugstruktur bestimmt sind.

Aus der gattungsgemäßen EP 0524 447 A1 ist ein weiteres Dichtungssystem bekannt, welches im Ursprungszustand längsgeteilt ausgebildet ist, wobei zwei, L-förmig ausgebildete Armierungsteilstücke einzeln mit Profilformteilstücken im Wege des Umspritzens versehen sind. Im montierten Zustand liegen jeweils zwei Schenkel der Armierungsteilstücke entlang einer Teilungsfuge berührend aneinander, wobei sich in Verbindung mit den Profilstrangteilstücken eine global U-förmige Querschnittsgestalt des Dichtungssystems ergibt und wobei an den freien Enden der Profilstrangformstücke jeweils Dichtungslippen angeformt sind, die sich im Schließzustand der Scheibe, welche durch ein teilweises Eindringen in den genannten Querschnitt gekennzeichnet ist, beiderseits dichtend an dieser anliegen. Im Öffnungszustand der Scheibe überdecken sich die Dichtungslippen teilweise. Die Befestigung der Armierungsteilstücke aneinander kann durch Nieten, Schrauben, Kleben, Schweißen oder dergleichen erfolgen und es ist insbesondere der Basisabschnitt in der Querschnittsgestalt zur unmittelbaren Anbindung an einer zugekehrten Berandung eines Karosserieteils eingerichtet.

Mit der längsgeteilten Ausführungsform des Dichtungssystems, insbesondere dann, wenn die beiden, entlang einer Teilungsfuge aneinander liegenden Abschnitte relativ zueinander justierbar sind, ist eine sehr genaue Einstellungsmöglichkeit gegeben. Wesensmerkmal beider letztgenannter Dichtungssysteme ist jedoch, dass die Scheibe im Schließzustand, in welchem ihre Berandung teilweise in den U-förmigen Querschnitt des Dichtungssystems eindringt, in diesem keinerlei Führungswirkung unterliegt, sieht man einmal von derjenigen der seitlich anliegenden Dichtungslippen ab. Dies führt dazu, dass sich bei höheren Fahrzeuggeschwindigkeiten aufgrund des außenseitig anstehenden Unterdrucks Bewegungen der Scheibe ergeben können, welche die Anpresskraft der innen- und außenseitigen Dichtungslippen verändern, so dass sich eine ungleichförmige Dichtungswirkung beiderseits der Scheibe ergibt.

Das Dichtungssystem gemäß der letztgenannten Fundstelle ist durch ein unmittelbares Anliegen der Armierungsteilstücke im Bodenbereich der genannten Querschnittsgestalt an zugekehrten Abschnitten einer Fahrzeugkarosserie bestimmt. Dies kann jedoch in Abhängigkeit von der konkreten Ausbildung der Karosserieteile zu Dichtungsproblemen im Anlagebereich zwischen den Armierungsteilstücken und der Karosserie führen.

Es ist vor diesem Hintergrund die Aufgabe der Erfindung, ein Dichtungssystem der eingangs bezeichneten Art unter Wahrung der Gestaltungsfreiheit für den Profilstrang, insbesondere der Einstellbarkeit der Baugruppen des Dichtungssystems relativ zueinander dieses mit Hinblick auf eine verbesserte Dichtungswirkung hin auszugestalten. Gelöst ist diese Aufgabe bei einem solchen Dichtungssystem durch die Merkmale des Kennzeichnungsteils des Anspruchs 1.

Längsgeteilte Dichtungssysteme kommen insbesondere bei Hardtops, bei Coupés oder bei einem Faltverdeck für Kabrioletts zum Einsatz. Die Längsteilung eröffnet die Möglichkeit, jedes Armierungsteilstück und zugehörige Profilstrangteilstück in optimaler Weise auszulegen und zu gestalten. Diese beiden Baugruppen werden letztlich zusammengefügt und durch die Befestigungselemente an dem zugehörigen Anschlussteil festgelegt. Vorteilhafterweise werden die Baugruppen nach ihrer Zusammenfügung nochmals in ein Formwerkzeug eingelegt, in welchem an wenigstens einer Stirnseite jedes Dichtungsprofilabschnitts eine Endkappe angeformt wird. Einzelheiten zu dieser Maßnahme sind aus der vorstehend bereits erwähnten Druckschrift DE 296 21 997 U1 entnehmbar und bedürfen hier keiner weiteren Erläuterung. Jede dieser Baugruppen aus einem Armierungsteilstück und einem Profilstrangteilstück ist ohne Eigenspannungen formstabil in optimaler Weise dreidimensional geformt. Auch das aus den beiden Baugruppen zusammengefügte Dichtungssystem behält diese maßlich idealen Eigenschaften, die eine passgenaue, reproduzierbare und besonders schnelle Montage des Dichtungssystems an dem Fahrzeug gewährleisten. Durch die Zweiteiligkeit des Dichtungssystems ist es auch möglich, die beiden Baugruppen in Querrichtung relativ zueinander einzustellen und erst dann mit den Befestigungselementen an dem zugehörigen Anschlussteil des Dachrahmens zu befestigen. Auf diese Weise lassen sich Einbaubesonderheiten berücksichtigen und die optimale relative Lage der Profilstrangteilstücke sicherstellen. Dadurch, dass die Armierungsteilstücke aneinander festlegbar sind, insbesondere längs einer Teilungsfuge in Berührung miteinander montierbar sind, ist nicht nur die Montage vereinfacht, sondern es erleichtert dies auch eine eventuelle Anbringung von Endkappen. Dadurch, dass ein dem Anschlussteil zugewandtes Armierungsteilstück auf einer dem Anschlussteil zugewandten Fläche mit einer Schicht des zugehörigen Profilstrangteils versehen ist, ergibt sich eine ausgezeichnete Abdichtung des Dichtungssystems gegenüber dem Anschlussteil des Dachrahmens. Schließlich ist infolge eines Anschlagwulstes des einen, zur Außenseite des Kraftfahrzeugs hin angeordneten Armierungsteilstücks eine Wegbegrenzung für ein Biegen der geschlossenen Scheibe nach außen eingerichtet, welche dann wirksam wird, wenn an der Scheibe bei höherer Fahrgeschwindigkeit an der Außenseite ein Unterdruck entsteht.

Ein Kleber entsprechend den Merkmalen des Anspruchs 2 kann flächig oder nur örtlich aufgetragen werden.

Eine Verschweißung gemäß den Merkmalen des Anspruchs 3 erfolgt vorzugsweise in der Form einer Punktschweißung. Dies genügt völlig, da die Festlegung in jedem Fall nur die beiden Baugruppen des Dichtungssystems relativ zueinander positionieren und solange fixieren soll, bis das gesamte Dichtungssystem durch die Befestigungselemente an dem zugehörigen Anschlussteil festgelegt ist.

Eine Sicherung gemäß den Merkmalen des Anspruchs 4 kann zum Beispiel durch eine vergleichsweise enge Passung zwischen dem Zapfen und der jeweiligen Durchbrechung erzeugt werden.

Statt dessen kann aber auch gemäß den Merkmalen des Anspruchs 5 eine formschlüssige Festlegung erfolgen.

Die Merkmale des Anspruchs 6 erleichtern die passgenaue Zusammenfügung der beiden Baugruppen des Dichtungssystems.

Auch die Merkmale der Ansprüche 7 oder 8 sorgen für eine sichere und passgenaue Zusammenfügung der beiden Baugruppen des Dichtungssystems.

Die Merkmale des Anspruchs 9 gestatten eine Quereinstellung der beiden Baugruppen des Dichtungssystems, bevor dessen Befestigung durch die Befestigungselemente an dem Anschlussteil des Dachrahmens erfolgt.

Eine Dichtwirkung zwischen dem Dichtungssystem und dem Anschlussteil des Dachrahmens wird durch die Merkmale des Anspruchs 10 noch bei Bedarf verbessert.

Insgesamt ergibt sich auch der Vorteil, dass bei außerhalb des Dichtungssystems angeordneter Scheibe der Innenraum des Dichtungssystems nicht einsehbar ist. Ein Spalt zwischen den Dichtlippen macht einen optisch unvorteilhaften Eindruck.

Gemäß den Merkmalen des Anspruchs 11 kommt der weitere Vorteil hinzu, dass bei außerhalb des Dichtungssystems angeordneter Scheibe auch Staub und Schmutz nicht in das Innere des Dichtungssystems eindringen können.

Gemäß den Merkmalen des Anspruchs 12 erhält man zusätzliche Biege- und Verwindungssteifigkeit für die Armierung und damit für das gesamte Dichtungssystem. Bei gleicher Festigkeit kann das Grundprofil der Armierung dünnwandiger ausgeführt und dadurch Material gespart werden.

Die Merkmale der Ansprüche 13 bis 15 führen je nach Bedarf zu der gewünschten Versteifung der Armierung. Vorzugsweise sind die Längsrippen an die Basis der Armierung angeformt und befinden sich die Querrippen in einem Abstand von zum Beispiel 5 mm bis 30 mm voneinander.

Diese und weitere Merkmale und Vorteile der Erfindung werden nachfolgend anhand der in den Zeichnungen dargestellten Ausführungsbeispiele näher erläutert. Es zeigt:
Fig. 1 eine perspektivische Ansicht schräg von oben auf ein Faltverdeck eines Kabrioletts,
Fig. 2 eine perspektivische Ansicht entsprechend Fig. 1 auf ein Hardtop,
Fig. 3 eine perspektivische Ansicht einer ersten Baueinheit eines Dichtungsprofilabschnitts für die C-Säule eines Kraftfahrzeugs,
Fig. 4 eine perspektivische Ansicht einer zweiten Baueinheit für den Dichtungsprofilabschnitt gemäß Fig. 3,
Fig. 5 eine perspektivische Ansicht der zusammengefügten Baueinheiten gemäß Fig. 3 und 4,
Fig. 6 die Schnittansicht nach Linie VI-VI in Fig. 5 in vergrößerter Darstellung mit zusätzlichen Teilen des Kraftfahrzeugs.
Fig. 7 einen der Fig. 6 entsprechenden Querschnitt durch eine andere Ausführungsform,
Fig. 8 einen der Fig. 6 entsprechenden Querschnitt durch eine weitere Ausführungsform.
Fig. 9 einen Querschnitt durch Einzelteile einer wiederum anderen Ausführungsform,
Fig. 10 die Schnittansicht entsprechend Linie X-X in Fig. 5 der Ausführungsform gemäß Fig. 9 in vergrößerter Darstellung,
Fig. 11 den Querschnitt gemäß Fig. 10, jedoch mit in das Dichtungssystem eingetauchter Scheibe und
Fig. 12 einen der Fig. 6 entsprechenden Querschnitt durch eine nochmals andere Ausführungsform.

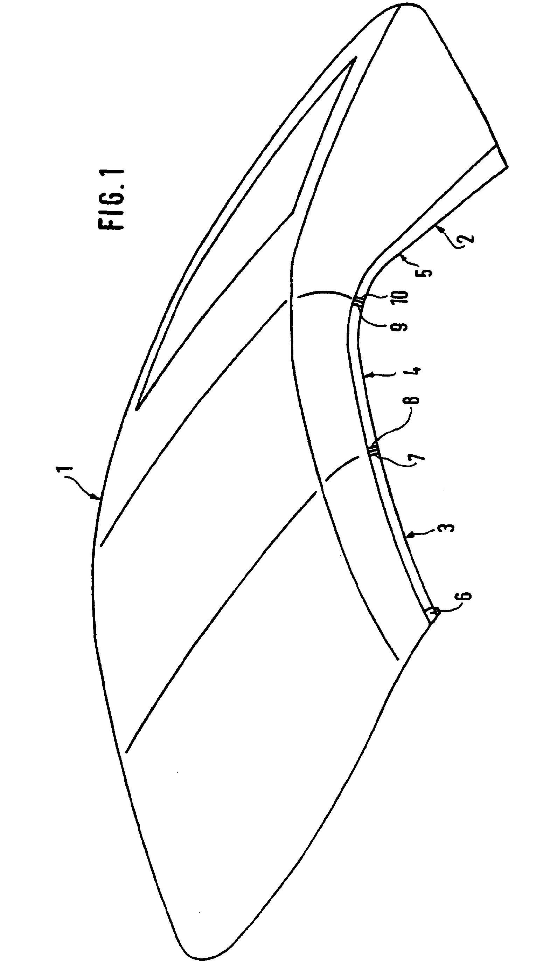

Fig. 1 zeigt einen Faltverdeck 1 eines Kabrioletts, dessen Dachrahmen auf jeder Seite mit einem dreiteiligen Dichtungssystem 2 versehen ist. Jedes Dichtungssystem weist einen vorderen, oberen Dichtungsprofilabschnitt 3, einen hinteren, oberen Dichtungsprofilabschnitt 4 und einen C-Säulenabschnitt 5 auf. Die Abschnitte 3 bis 5 sind jeweils an Anschlußteilen des zugehörigen Verdeckgestänges befestigt. Der Abschnitt 3 weist angeformte Endkappen 6 und 7, der Abschnitt 4 angeformte Endkappen 8 und 9 und der Abschnitt 5 an seinem oberen Ende eine angeformte Endkappe 10 auf.

In allen Zeichnungsfiguren sind gleiche Teile mit gleichen Bezugszahlen versehen.

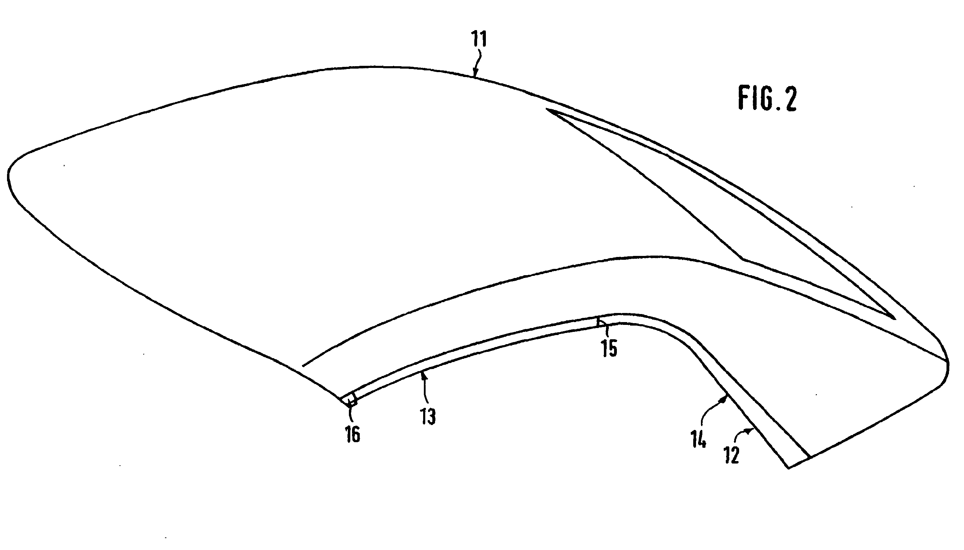

In Fig. 2 ist ein Hardtop 11 dargestellt, dessen Dachrahmen auf jeder Seite mit einem zweiteiligen Dichtungssystem 12 versehen ist. Jedes Dichtungssystem 12 weist einen vorderen Dichtungsprofilabschnitt 13 und einen C-Säulenabschnitt 14 auf.

Der C-Säulenabschnitt 14 ist prinzipiell in der gleichen Weise ausgebildet wie der C-Säulenabschnitt 5 in Fig. 1 und gegebenenfalls die Dichtungsprofilabschnitte 3 und 4 in Fig. 1. Der Dichtungsprofilabschnitt 13 besteht dagegen vorzugsweise aus einem an sich bekannten einstückigen, extrudierten Dichtungsprofil. Der Dichtungsprofilabschnitt 13 ist vorne mit einer angeformten Endkappe 16 versehen und hinten an einer Übergangsstelle 15 mit dem C-Säulenabschnitt 14 dicht verbunden.

Die nachfolgenden Zeichnungsfiguren erläutern Ausführungsformen des C-Säulenabschnitts 5, 14. Andere Dichtungsprofilabschnitte, wie die Dichtungsprofilabschnitte 3, 4 in Fig. 1, können in ähnlicher Weise ausgebildet sein.

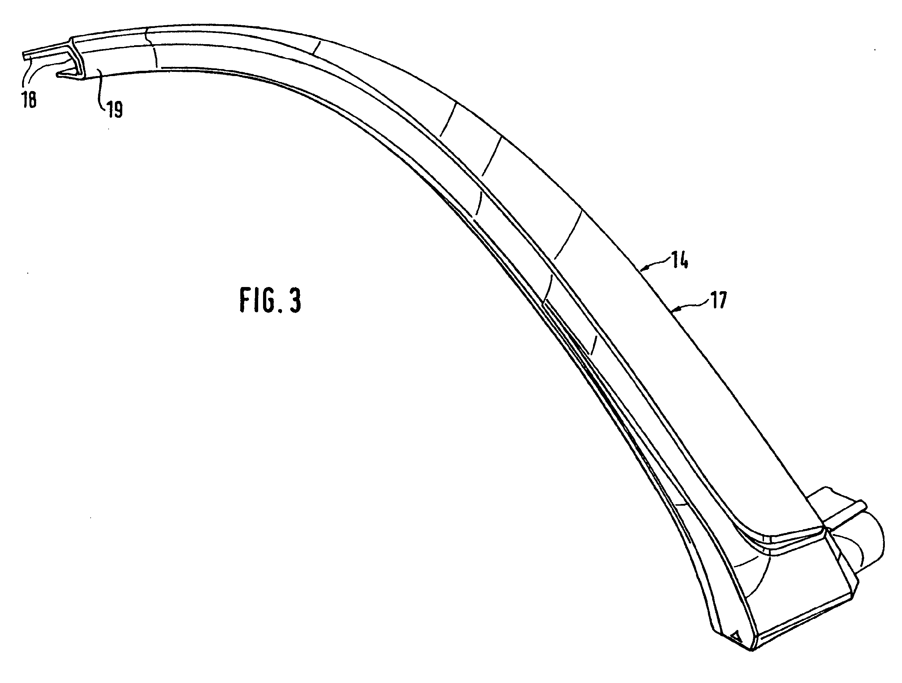

Fig. 3 zeigt eine erste Baueinheit 17 des C-Säulenabschnitts 14. Diese erste Baueinheit 17 besteht aus einem ersten Armierungsteilstück 18 aus Kunststoff und einem daran angeformten ersten Profilstrangteilstück 19 aus einem Elastomer. Die erste Baueinheit 17 wird so hergestellt, daß zunächst das erste Armierungsteilstück 18 als Kunststoffspritzgußteil mit seiner endgültigen dreidimensionalen Formgebung hergestellt wird. Das erste Armierungsteilstück 18 wird sodann in ein Formwerkzeug eingelegt und darin mit dem Profilstrangteilstück 19 auch in dessen endgültiger dreidimensionaler Formgebung versehen.

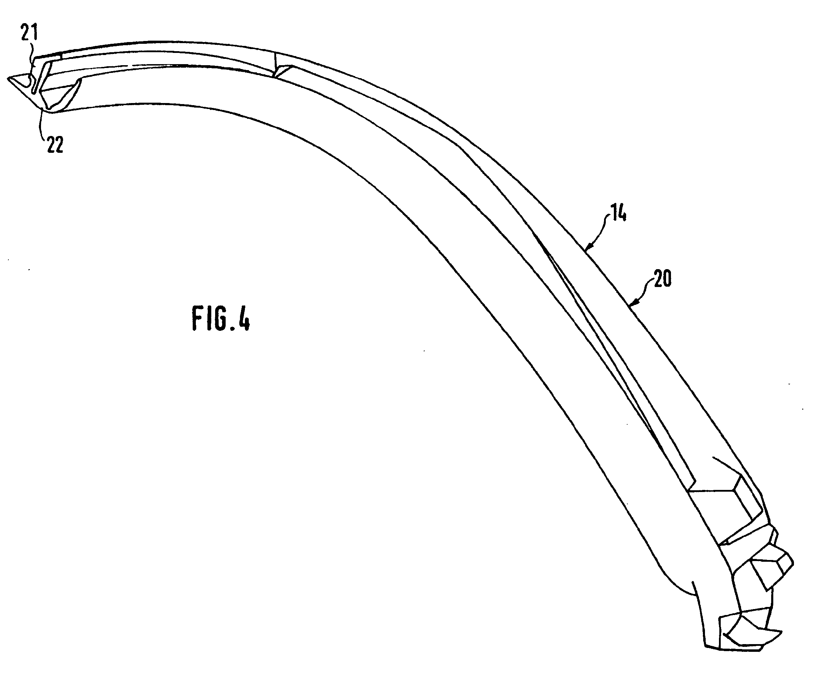

Fig. 4 zeigt eine zweite Baueinheit 20 des C-Säulenabschnitts 14. Die zweite Baueinheit ist aus einem zweiten Armierungsteilstück 21 aus Kunststoff und einem daran angeformten zweiten Profilstrangteilstück 22 aufgebaut und in der gleichen Weise hergestellt wie die erste Baueinheit 17.

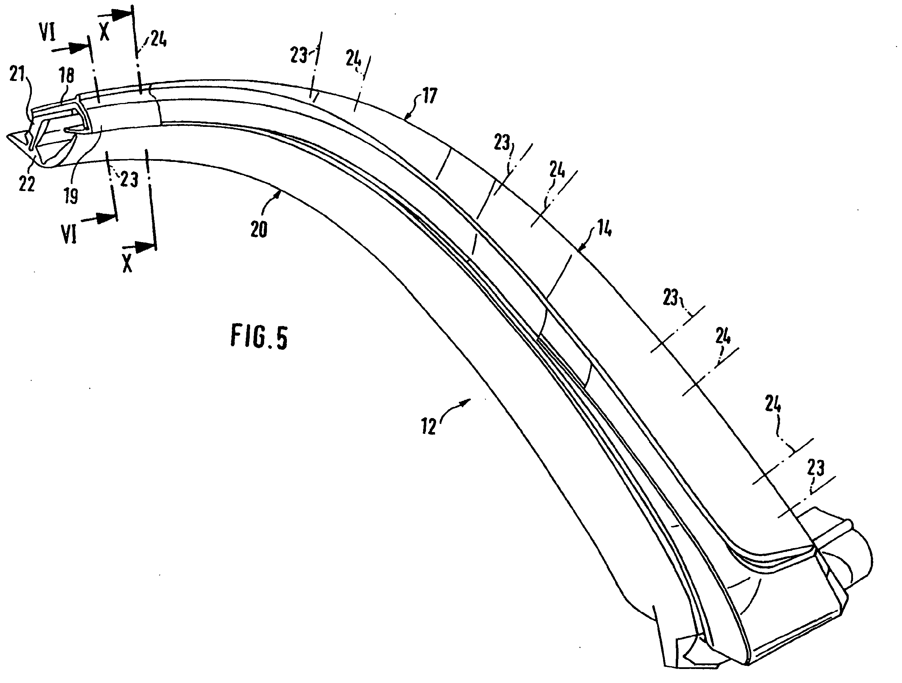

Fig. 5 verdeutlicht die Baueinheiten 17 und 20 in zusammengefügtem Zustand, in welchem sie den C-Säulenabschnitt 14 bilden.

In Fig. 5 sind jeweils mit strichpunktierten Linien Querebenen 23 und 24 des C-Säulenabschnitts 14 angedeutet. In den Querebenen 23 befinden sich später im einzelnen zu beschreibende Positionierelemente, die die Baueinheiten 17, 20 relativ zueinander positionieren. Dagegen sind in den Querebenen 24 später zu beschreibende Befestigungselemente angeordnet, mit denen der C-Säulenabschnitt 14 an dem zugehörigen Anschlußteil des Dachrahmens festgelegt wird.

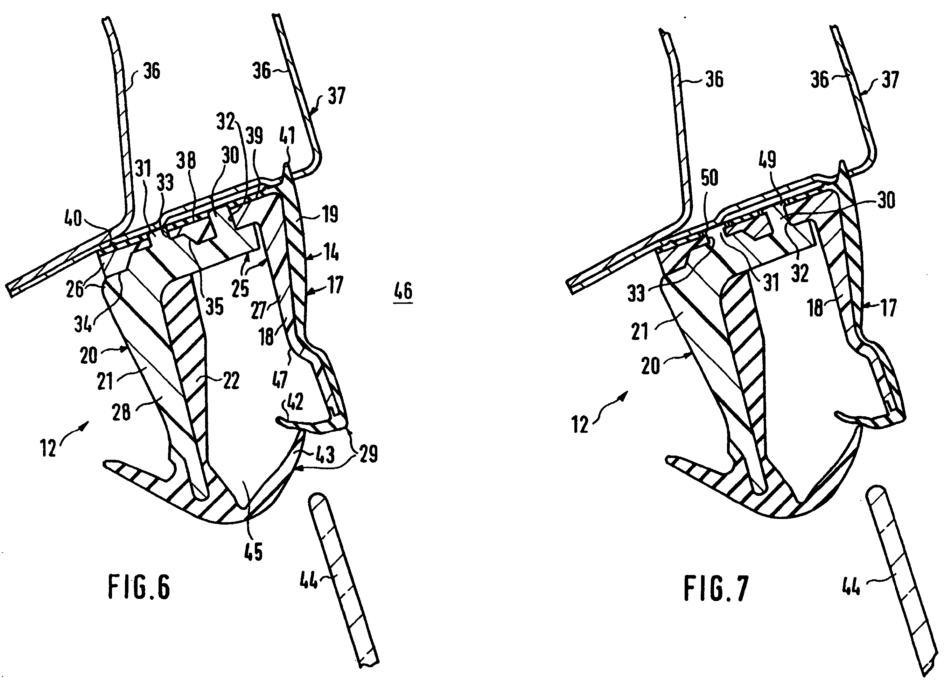

Fig. 6 verdeutlicht Einzelheiten des C-Säulenabschnitts 14 und seiner Einbausituation. Insbesondere ist zu erkennen, daß eine Armierung 25 aus den beiden Armierungsteilstücken 18, 21 zusammengesetzt ist. Die Armierung 25 weist auf ihrer zumindest annähernd gesamten Länge einen im wesentlichen U-förmigen Querschnitt mit einer Basis 26 und sich von der Basis erstreckenden Schenkeln 27 und 28 auf. In ähnlicher Weise besteht ein Profilstrang 29 aus den Profilstrangteilstücken 19, 22. denen jeweils eine eigenständige Funktion zugewiesen ist.

Die Baueinheiten 17, 20 sind im Fall der Fig. 6 dadurch relativ zueinander positioniert und fixiert, daß Zapfen 30 und 31 des zweiten Armierungsteilstücks 21 mit verhältnismäßig enger Passung in komplementären Durchbrechungen 32 und 33 in der Basis 26 des ersten Armierungsteilstücks 18 sitzen. Die Armierungsteilstücke 18, 21 sind auf diese Weise längs einer Teilungsfuge 34 in Berührung miteinander montiert. Die Teilungsfuge 34 weist zur Zentrierung der Armierungsteilstücke 18. 21 relativ zueinander eine Profilierung 35 auf.

Der C-Säulenabschnitt 14 ist gemäß Fig. 6 an einem aus Blech geformten Anschlußteil 36 des Dachrahmens 37 eines Kraftfahrzeugs in später zu beschreibender Weise festgelegt. Das dem Anschlußteil 36 zugewandte Armierungsteilstück 18 ist auf einer dem Anschlußteil 36 zugewandten Fläche 38 mit einer Schicht 39 des zugehörigen ersten Profilstrangteilstücks 19 versehen. Die Schicht 39 weist im Bereich ihrer Längskanten jeweils eine mit dem Anschlußteil 36 zusammenwirkende Dichtlippe 40 und 41 auf. Beide Dichtlippen 40, 41 sind in Fig. 6 in ihrer voll entspannten Ausgangslage dargestellt. In der fertig montierten Stellung gemäß Fig. 6 werden die Dichtlippen 40, 41 naturgemäß verformt und legen sich unter Erhöhung der Vorspannung an die gegenüberliegende Kontur des Anschlußteils 36 an.

Jedes Profilstrangteilstück 19, 22 weist eine im Bereich eines freien Endes des zugehörigen Schenkels 27, 28 angeformte Dichtlippe 42 und 43 auf. Bei gemäß Fig. 6 montiertem Dichtungssystem 12 überlappen freie Enden der Dichtlippen 42, 43 einander bei außerhalb des Dichtungssystems 12 angeordneter Scheibe 44 des Kraftfahrzeugs. Die freien Enden der Dichtlippen 42, 43 liegen vorzugsweise gemäß Fig. 6 unter Vorspannung aneinander an. Auf diese Weise ist zum einen ein störender Einblick in einen Innenraum 45 des Dichtungssystems 12 unterbunden und wird zum anderen verhindert, daß in diesem Betriebszustand Staub und Fremdkörper sowie Feuchtigkeit von außen in den Innenraum 45 eindringen können. Derartige Dichtlippen 42, 43 ließen sich bei gemäß der vorerwähnten DE 296 21 997 U1 einstückiger Ausbildung des Dichtungssystems nicht realisieren.

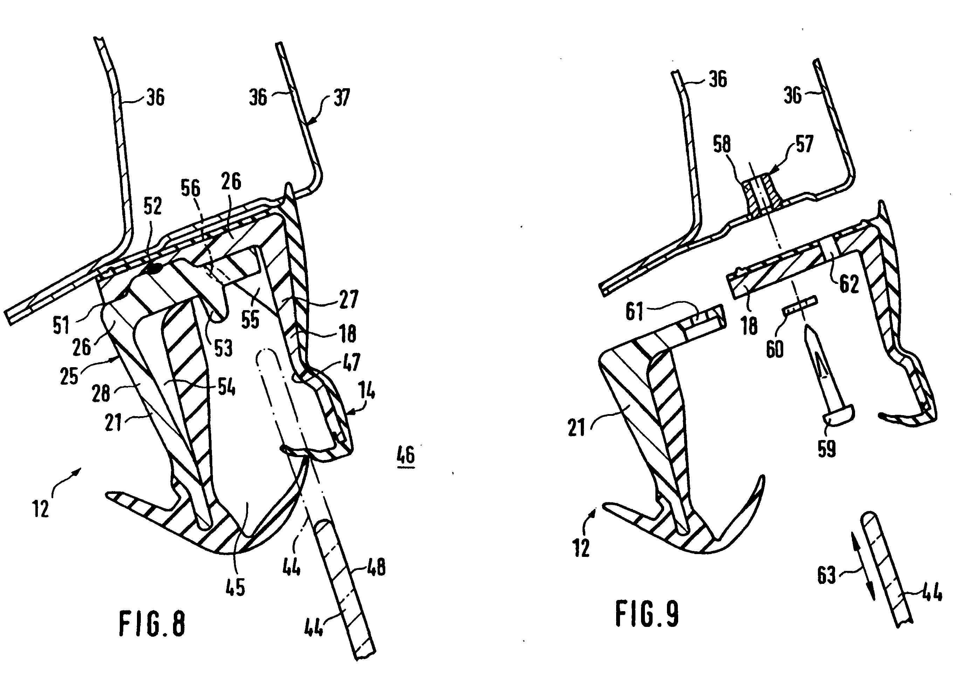

Das zu einer Außenseite 46 des Kraftfahrzeugs hin angeordnete Armierungsteilstück 18 ist mit einem Anschlagwulst 47 für eine Außenseite 48 der Scheibe 44 versehen, die allerdings erst dann in Funktion tritt, wenn die Scheibe 44 gemäß Fig. 8 ganz geschlossen ist.

Die Ausführungsform gemäß Fig. 7 entspricht derjenigen von Fig. 6 mit dem einzigen Unterschied, daß ein freies Ende jedes Zapfens 30, 31 hinter dem ersten Armierungsteilstück 18 durch Wärme- und Druckeinwirkung zu einem Kopf 49 und 50 verformt ist. Der Querschnitt der Köpfe 49, 50 ist größer als der Querschnitt der zugehörigen Durchbrechung 32, 33, so daß sich eine formschlüssige Verbindung der Armierungsteilstücke 18, 21 und damit der Baueinheiten 17, 20 miteinander ergibt.

Gemäß Fig. 8 sind die Armierungsteilstücke 18, 21 durch Kleber 51 in der Teilungsfuge aneinander festgelegt. Alternativ könnte diese relative Festlegung auch durch im Abstand voneinander angebrachte Schweißpunkte 52 geschehen.

Die Armierung 25 ist gemäß Fig. 8 in dem Innenraum 45 mit Versteifungsrippen 53, 54 und 55 versehen. Die Versteifungsrippe 53 ist als Längsrippe ausgebildet und an das zweite Armierungsteilstück 21 angeformt. Dagegen sind die Versteifungsrippen 54 und 55 jeweils als sich in einer Querrichtung der Armierung 25 erstreckende, in einer Längsrichtung der Armierung in einem Abstand voneinander angeordnete Querrippen ausgebildet. Dabei erstreckt sich jede Querrippe 54, 55 von dem zugehörigen Schenkel 28, 27 der Armierung 25 bis zu der Basis 26 des zugehörigen Armierungsteilstücks 21, 18. Für jede Versteifungsrippe 55 ist in die Basis 26 des Armierungsteilstücks 21 eine gestrichelt angedeutete Nut 56 eingeformt.

Fig. 8 zeigt auch die Scheibe 44 in strichpunktierten Linien in ihrer voll geschlossenen, obersten Stellung, in welcher die Scheibe 44 in den Innenraum 45 eingetaucht ist. Wenn während der Fahrt auf der Außenseite 46 des Kraftfahrzeugs Unterdruck entsteht, wird die (geschlossene) Scheibe 44 in Fig. 8 nach rechts gesaugt und gebogen, bis ihrer Außenseite 48 sich an den Anschlagwulst 47 anlegt. Auf diese Weise findet eine Wegbegrenzung für die an sich unerwünschte Auswärtsbewegung der Scheibe 44 statt.

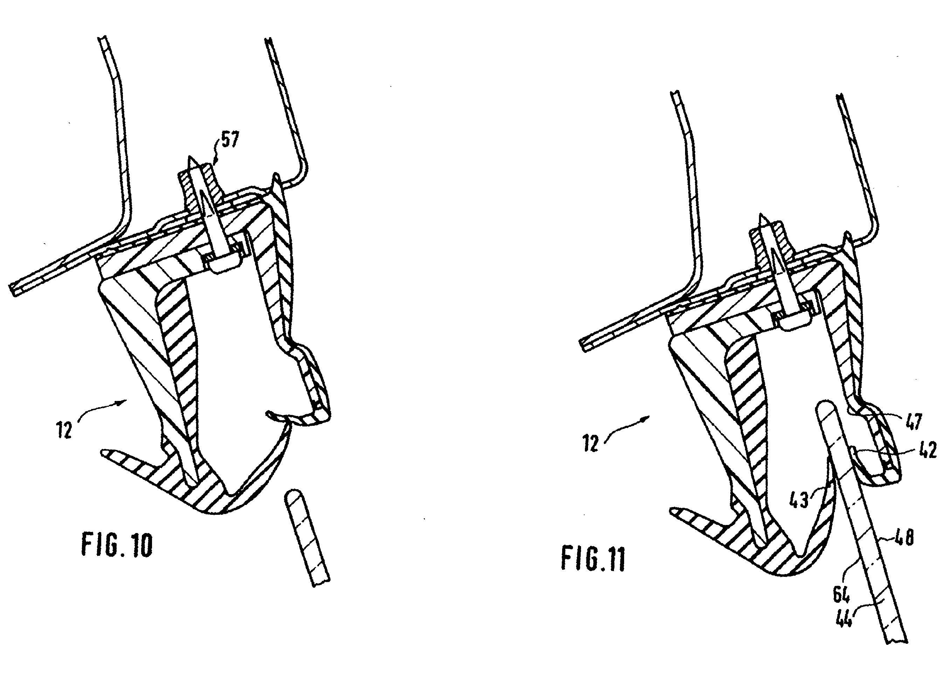

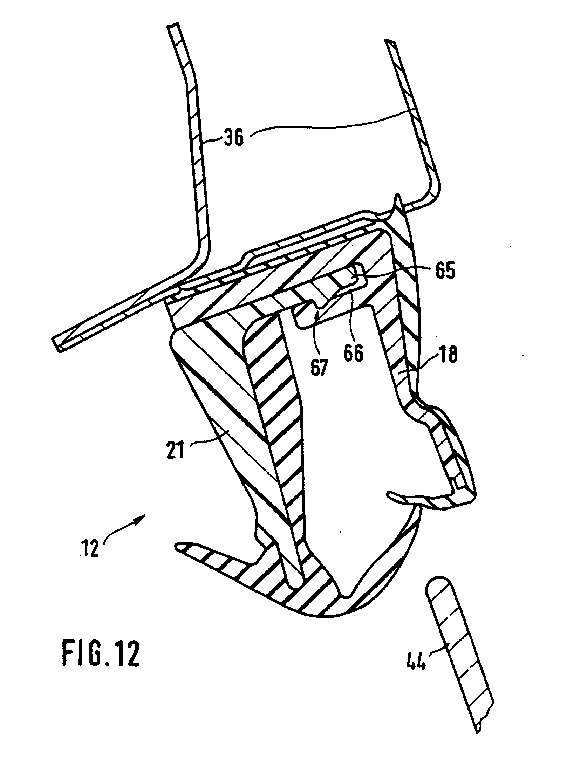

Fig. 10 stellt im wesentlichen einen Querschnitt gemäß Linie X-X in Fig. 5 dar. In der zugehörigen Querebene 24 des Dichtungssystems 12 ist ein Befestigungselement 57 angeordnet, dessen Einzelteile besonders gut aus Fig. 9 ersichtlich sind. Ein Mutterstück 58 ist an dem Anschlußteil 36 angeordnet und nimmt einen Bolzen 59 auf, der zunächst durch eine Scheibe 60 und sodann durch Durchbrechungen 61 und 62 in den Armierungsteilstücken 21 und 18 hindurchgesteckt und dann in das Mutterstück 58 eingeführt wird. Die fertig montierte Endposition ist aus den Fig. 10 und 11 ersichtlich.

In Fig. 9 sind die Bewegungsrichtungen der Scheibe 44 durch einen Doppelpfeil 63 angedeutet.

In Fig. 11 ist die Scheibe 44 in ihrer obersten, geschlossenen Endstellung eingezeichnet. Zu sehen ist auch, daß sich in dieser Endstellung die freien Enden der Dichtlippen 42 und 43 in dichtender Anlage an jeweils einer Seite 48 und 64 befinden.

Bei dem Ausführungsbeispiel nach Fig. 12 greift eine freie Längskante 65 des zweiten Armierungsteilstücks 21 in eine Längsnut 66 des ersten Armierungsteilstücks 18 ein. Die freie Längskante 65 ist dabei durch eine Rastverbindung 67 formschlüssig in der Längsnut 66 verriegelt.

Als Elastomere für den Profilstrang 29, 19, 22 können z.B. folgende Stoffe eingesetzt werden:
Moosgummi einer Härte von 10 bis 30 Shore-A oder Weichgummi einer Härte von 30 bis 70 Shore-A, beide z.B. hergestellt aus EPDM, SBR, CR, ECO, Verschnitten (Abmischungen) von EPDM mit SBR mit einem EPDM-Gewichtsanteil von 20 bis 90 %, Verschnitten von EPDM mit SBR und/oder Polyoctenamer, oder NBR.
Einsetzbar sind z.B. auch folgende thermoplastischen Elastomere (TPE):
TPE auf Basis Styrol Ethylen Butylen Styrol (SEB-S),
TPE auf Basis Styrol Ethylen Butylen Styrol (SBS),
TPE auf Basis Styrol Isopren Styrol (SIS),
TPE auf der Basis von Elastomerlegierungen als TPO-Blends oder TPO-Alloys, z.B. von vernetztem EPDM/Propylen-Blend (EPDM/PP) oder
   Ethylenvinylacetat/Vinylidenchlorid (EVA/PVDC) oder TPE auf der Basis von thermoplastischen Polyurethanen (TPU); TPO ist das Kurzzeichen für thermoplastische Polyolefin(Elastomer)e.
Der Profilstrang 29, 19, 22 kann auch aus mehreren der zuvor erwähnten Elastomere geformt und anschließend entlang den miteinander in Berührung stehenden Grenzflächen aneinander vulkanisiert werden. Dann besteht zwischen den einzelnen Teilen des Profilstrangs 17 jeweils ein chemischer Verbund von ausreichender Festigkeit.
Die Armierung 25, 18, 21 besteht dagegen vorzugsweise aus einem thermoplastischen Kunststoff. Dafür kommen z.B. folgende Stoffe in Betracht:
   PPE Polyphenylenether.
   PP Polypropylen.
   PE (LDPE, low density PE),
   PE (HDPE, high density PE),
   PIB Polyisobutylen,
   PS Polystyrol,
   PA Polyamid,
   PC Polycarbonat,
   PETP Polyethylenterephthalat,
   POM Polyoxymethylen,
   Epoxyharze,
   Phenolformaldehydharze.
   PES Polyester,
   PPO Polyphenylether,
   PVP Polyvinylchlorid oder
   Modifikationen dieser thermoplastischen Kunststoffe.

Diese Kunststoffe können mit oder ohne Verstärkung, z.B. durch Kohle- oder Glas- oder Silizium- oder Polymerfasern oder durch Mineralien (Talkum), verwendet werden.

Zwischen dem Profilstrang 29, 19, 22 und der Armierung 25, 18. 21 kann noch eine Schicht aus einem Kupplungsmaterial angeordnet sein (nicht dargestellt). Das Kupplungsmaterial hat dann die Aufgabe, den chemischen Verbund zwischen dem Elastomer des Profilstrangs und dem thermoplastischen Kunststoff der Armierung zu verbessern. Als Kupplungsmaterial kommen z.B. folgende Stoffe in Betracht:
EPDM im Verschnitt mit PP. PE, PS, PIB, PES, sowie anderen Polymeren aus der vorerwähnten Aufstellung der Stoffe der Armierung 25, 18, 21 in Gewichtsanteilen < 20 %,
Verschnittene EPDM - CR - SBR - Polyoctenamer oder EPDM-Compounds mit Harzbeimengungen (z.B. Epoxyharzen) oder andere marktübliche Haftvermittler

Wenn die Armierung 25, 18, 21 aus einem TPE besteht, kommt als Kupplungsmaterial z.B. ein Polypropylenprimer in Betracht.

## Patentansprüche

1. Dichtungssystem (2;12) mit wenigstens einem Dichtungsprofilabschnitt (3,4,5;13,15) für den Dachrahmen (37) eines Kraftfahrzeugs mit bewegbaren, rahmenlosen Scheiben (44), welches dreidimensional geformt und an Anschlussteilen (36) des Dachrahmens (37) mit Befestigungselementen (57) festlegbar ist, wobei jeder Dichtungsprofilabschnitt (3,4,5;14) einen durch eine Armierung (25) verstärkten Profilstrang (29) aus wenigstens einem Elastomer aufweist, wobei der Profilstrang (29) zum abdichtenden Zusammenwirken mit der Scheibe (44) eingerichtet ist, wobei die Armierung (25) auf einem Teil ihrer Oberfläche mit dem Profilstrang (29) versehen ist und auf ihrer zumindest annähernd gesamten Länge einen im Wesentlichen U-förmigen Querschnitt mit einer Basis (26) und mit sich von der Basis (26) erstreckenden Schenkeln (27,28) aufweist, wobei die Armierung (25) und der Profilstrang (29) im Bereich der Basis (26) jeweils in Teilstücken (18,21;19,22) längsgeteilt ausgebildet sind, wobei jedes Armierungsteilstück (18,21) mit einem zugehörigen Profilstrangteilstück (19,22) versehen ist, wobei jedes Profilstrangteilstück (19,22) eine im Bereich eines freien Endes des zugehörigen Schenkels (27,28) angeformte Dichtlippe (42,43) aufweist, und wobei bei montiertem Dichtungssystem (2;12) freie Enden der Dichtlippen (42,43) bei außerhalb des Dichtungssystems (2;12) angeordneter Scheibe (44) einander quer zu einer Bewegungsrichtung (63) der Scheibe (44) überlappen und bei in das Dichtungssystem (2;12) eingetauchter Scheibe (44) an jeweils einer Seite der Scheibe (44) dichtend anliegen und wobei die Armierungsteilstücke (18,21) längs einer Teilungsfuge (34) in Berührung miteinander montierbar sind, wobei ein dem Anschlussteil (36) zugewandtes Armierungsteilstück (18) auf einer dem Anschlussteil (36) zugewandten Fläche (38) mit einer Schicht (39) des zugehörigen Profilstrangteilstücks (19) versehen ist, **dadurch gekennzeichnet, dass** ein zur Außenseite (46) des Kraftfahrzeugs hin angeordnetes Armierungsteilstück (18) einen Anschlagwulst (47) für eine Außenseite (48) der in das Dichtungssystem (2;12) eingetauchten Scheibe (44) aufweist.

2. Dichtungssystem nach Anspruch 1, **dadurch gekennzeichnet, dass** in der Teilungsfuge (34) ein Kleber (51) zur Festlegung der Armierungsteilstücke (18,21) aneinander vorgesehen ist.

3. Dichtungssystem nach Anspruch 1, **dadurch gekennzeichnet, dass** eine Verschweißung (52) zur Festlegung der Armierungsteilstücke (18,21) aneinander vorgesehen ist.

4. Dichtungssystem nach Anspruch 1, **dadurch gekennzeichnet, dass** an dem einen Armierungsteilstück (21) Zapfen (30,31) angeformt sind, die in eine Durchbrechung (32,33) des anderen Armierungsteilstücks (18) eingesteckt und gesichert sind.

5. Dichtungssystem nach Anspruch 4, **dadurch gekennzeichnet, dass** an einem freien Ende eines jeden Zapfens (30,31) hinter dem anderen Armierungsteilstück (18) ein Kopf (49,50) angeformt ist und dass der Querschnitt des Kopfes (49,50) größer ist als der Querschnitt der zugehörigen Durchbrechung (32,33).

6. Dichtungssystem nach einem der Ansprüche 1 bis 5, **dadurch gekennzeichnet, dass** die Teilungsfuge (34) zur Zentrierung der Armierungsteilstücke (18,21) relativ zueinander eine Profilierung (35) aufweist.

7. Dichtungssystem nach Anspruch 1, **dadurch gekennzeichnet, dass** eine freie Längskante (65) des einen Armierungsteilstücks (21) in eine Längsnut (66) des anderen Armierungsteilstücks (18) eingreift.

8. Dichtungssystem nach Anspruch 7, **dadurch gekennzeichnet, dass** die freie Längskante (65) durch eine Rastverbindung (67) formschlüssig in der Längsnut (66) verriegelt ist.

9. Dichtungssystem nach Anspruch 1, **dadurch gekennzeichnet, dass** die Armierungsteilstücke (18,21) längs der Teilungsfuge (34) aufeinander legbar und durch die Befestigungselemente (57) aneinander und an dem Anschlussteil (36) festlegbar sind.

10. Dichtungssystem nach einem der Ansprüche 1 bis 9, **dadurch gekennzeichnet, dass** die Schicht (39) im Bereich wenigstens einer ihrer Längskanten eine mit dem Anschlussteil (36) zusammenwirkende Dichte (40,41) aufweist.

11. Dichtungssystem nach einem der Ansprüche 1 bis 10, **dadurch gekennzeichnet, dass** die freien Ende der Dichtlippen (42,43) bei außerhalb des Dichtungssystems (2;12) angeordneter Scheibe (44) unter Vorspannung aneinander liegen.

12. Dichtungssystem nach einem der Ansprüche 1 bis 11, **dadurch gekennzeichnet, dass** die Armierung (25) in einem Innenraum (45) ihres im Wesentlichen U-förmigen Querschnitts mit wenigstens einer Versteifungsrippe (53;54;55) versehen ist.

13. Dichtungssystem nach Anspruch 12, **dadurch gekennzeichnet, dass** die wenigstens eine Versteifungsrippe (53) als sich in Längsrichtung der Armierung (25) erstreckende Längsrippe ausgebildet ist.

14. Dichtungssystem nach Anspruch 12 oder 13, **dadurch gekennzeichnet, dass** die Versteifungsrippen (54;55) als sich in einer Querrichtung der Armierung (25) erstreckende, in einer Längsrichtung der Armierung (25) in einem Abstand voneinander angeordnete Querrippen ausgebildet sind.

15. Dichtungssystem nach Anspruch 14, **dadurch gekennzeichnet, dass** jede Querrippe (54;55) sich von einem Schenkel (27;28) der Armierung (25) bis zu einer Basis (26) des zugehörigen Armierungsteilstücks (18;21) erstreckt.

## Claims

1. Sealing system (2;12) having at least one sealing profile section (3, 4, 5; 13, 15) for the roof frame (37) of a motor vehicle having moveable, frame-less windows (44), which is formed in a three-dimensional manner and can be fixed to connection parts (36) of the roof frame (37) with attachment elements (57), wherein each sealing profile section (3, 4, 5; 14) comprises a profile strip (29) which is reinforced by a reinforcement (25) and consists of at least one elastomer, wherein the profile strip (29) is arranged to cooperate in a sealing manner with the window (44), wherein the reinforcement (25) is provided with the profile strip (29) on a part of its surface and comprises on its at least almost total length a substantially U-shaped cross-section with a base (26) and limbs (27, 28) extending from the base (26), wherein the reinforcement (25) and the profile strip (29) are longitudinally partitioned in the region of the base (26) in each case into part pieces (18, 21; 19, 22), wherein each reinforcement part piece (18, 21) is provided with an associated profile strip part piece (19, 22), wherein each profile strip part piece (19, 22) comprises a sealing lip (42, 43) which is integrally formed in the region of a free end of the associated limb (27, 28), and wherein when the sealing system (2;12) is assembled, free ends of the sealing lips (42, 43) overlap each other in a transverse manner with respect to a movement direction (63) of the window (44) when the window (44) is disposed outside the sealing system (2;12), and when the window (44) is inserted into the sealing system (2;12) the said free ends lie in a sealing manner in each case on a side of the window (44) and wherein the reinforcement part pieces (18, 21) can be mounted in contact with each other along a partition joint (34), wherein a reinforcement part piece (18) facing the connection part (36) is provided on a surface (38) facing the connection part (36) with a layer (39) of the associated profile strip part piece (19), **characterised in that** a reinforcement part piece (18) disposed towards the outer side (46) of the motor vehicle comprises a stop bead (47) for an outer side (48) of the window (44) inserted into the sealing system (2; 12).

2. Sealing system as claimed in claim 1, **characterised in that** in the partition joint (34) an adhesive (51) is provided to fix the reinforcement part pieces (18,21) to each other.

3. Sealing system as claimed in claim 1, **characterised in that** a weld connection (52) is provided to fix the reinforcement part pieces (18, 21) to each other.

4. Sealing system as claimed in claim 1, **characterised in that** spigots (30, 31) are integrally formed on one reinforcement part piece (21) and are inserted and secured in an orifice (32, 33) of the other reinforcement part piece (18).

5. Sealing system as claimed in claim 4, **characterised in that** a head (49, 50) is integrally formed on a free end of each spigot (30, 31) behind the other reinforcement part piece (18) and that the cross-section of the head (49, 50) is larger than the cross-section of the associated orifice (32, 33).

6. Sealing system as claimed in any one of claims 1 to 5, **characterised in that** the partition joint (34) comprises a profiling (35) for centring the reinforcement part pieces (18, 21) relative to each other.

7. Sealing system as claimed in claim 1, **characterised in that** a free longitudinal edge (65) of the one reinforcement part piece (21) engages into a longitudinal groove (66) of the other reinforcement part piece (18).

8. Sealing system as claimed in claim 7, **characterised in that** the free longitudinal edge (65) is locked by means of a latching connection (67) in a form-locking manner in the longitudinal groove (66).

9. Sealing system as claimed in claim 1, **characterised in that** the reinforcement part pieces (18, 21) can be placed one above the other along the partition joint (34) and fixed by means of the attachment elements (57) to each other and to the connection part (36).

10. Sealing system as claimed in any one of claims 1 to 9, **characterised in that** the layer (39) comprises in the region of at least one of its longitudinal edges a seal (40;41) which cooperates with the connection part (36).

11. Sealing system as claimed in any one of claims 1 to 10, **characterised in that** when the window (44) is disposed outside the sealing system (2;12) the free ends of the sealing lips (42, 43) lie in a biased arrangement against each other.

12. Sealing system as claimed in any one of claims 1 to 11, **characterised in that** the reinforcement (25) is provided in an interior space (45) of its substantially U-shaped cross-section with at least one stiffening rib (53; 54; 55).

13. Sealing system as claimed in claim 12, **characterised in that** the at least one stiffening rib (53) is formed as a longitudinal rib extending in the longitudinal direction of the reinforcement (25).

14. Sealing system as claimed in claim 12 or 13, **characterised in that** the stiffening ribs (54;55) are formed as transverse ribs extending in a transverse direction of the reinforcement (25) and in a spaced disposition from each other in a longitudinal direction of the reinforcement (25).

15. Sealing system as claimed in claim 14, **characterised in that** each transverse rib (54; 55) extends from one limb (27;28) of the reinforcement (25) as far as a base (26) of the associated reinforcement part piece (18;21).

## Revendications

1. Système d'étanchéité (2 ; 12) comportant au moins une partie de profilé d'étanchéité (3, 4, 5 ; 13, 15) pour le cadre de toit (37) d'un véhicule automobile avec des vitres (44) mobiles, sans cadre, lequel système a une forme tridimensionnelle et peut être fixé par des éléments de fixation (57) contre des éléments de raccordement (36) du cadre de toit (37), chaque partie de profilé d'étanchéité (3, 4, 5 ; 14) comportant un tronçon profilé (29), renforcé par une armature (25) et réalisé dans au moins un élastomère, le tronçon profilé (29) étant conçu pour coopérer de manière étanche avec la vitre (44), l'armature (25) étant munie du tronçon profilé (29) sur une partie de sa surface et ayant sur au moins à peu près toute sa longueur une section en forme de U avec une base (26) et des branches (27, 28) qui s'étendent depuis la base (26), l'armature (25) et le tronçon profilé (29) dans la zone de la base (26) étant divisés chacun dans le sens longitudinal en sous-éléments (18, 21 ; 19, 22), chaque sous-élément d'armature (18, 21) étant muni d'un sous-élément de profilé (19, 22) associé, chaque sous-élément de profilé (19, 22) comportant une lèvre d'étanchéité (42, 43) formée dans la zone d'une extrémité libre de la branche (27, 28) correspondante, et, dans la position montée du système d'étanchéité (2 ; 12), des extrémités libres des lèvres d'étanchéité (42, 43) se chevauchant l'une l'autre perpendiculairement à une direction (63) du mouvement de la vitre (44) lorsque la vitre (44) est située en dehors du système d'étanchéité (2; 12), et étant en appui étanche chacune sur un côté de la vitre (44) lorsque la vitre (44) est insérée dans le système d'étanchéité (2; 12), et les sous-éléments d'armature (18, 21) pouvant être montés en contact l'un avec l'autre le long d'un joint de séparation (34), un sous-élément d'armature (18), orienté vers l'élément de raccordement (36), étant couvert sur une face orientée vers l'élément de raccordement (36) par une face (39) du sous-élément de profilé (19) associé, **caractérisé en ce qu'**un sous-élément d'armature (18), agencé vers la face extérieure (46) du véhicule, comporte un bourrelet de butée (47) pour une face extérieure (48) de la vitre (44) insérée dans le système d'étanchéité (2; 12).

2. Système d'étanchéité selon la revendication 1, **caractérisé en ce qu'**une matière adhésive (51), destinée à fixer les sous-éléments d'armature (18, 21) l'un contre l'autre, est prévue dans le joint de séparation (34).

3. Système d'étanchéité selon la revendication 1, **caractérisé en ce qu'**il est prévu un cordon de soudure (52) destiné à fixer les sous-éléments d'armature (18, 21) l'un contre l'autre.

4. Système d'étanchéité selon la revendication 1, **caractérisé en ce que** des tétons (30, 31) sont formés sur un sous-élément d'armature (21), lesquels sont insérés et bloqués dans un trou débouchant (32, 33) de l'autre sous-élément d'armature (18).

5. Système d'étanchéité selon la revendication 4, **caractérisé en ce qu'**une tête (49, 50) est formée sur une extrémité libre de chaque téton (30, 31) derrière l'autre sous-élément d'armature (18) et **en ce que** la section de la tête (49, 50) est plus grande que la section du trou débouchant (32, 33) correspondant.

6. Système d'étanchéité selon l'une quelconque des revendications 1 à 5, **caractérisé en ce que** le joint de séparation (34) comporte un profilage (35) destiné à centrer les sous-éléments d'armature (18, 21) l'un par rapport à l'autre.

7. Système d'étanchéité selon la revendication 1, **caractérisé en ce qu'**un bord longitudinal libre (65) de l'un des sous-éléments d'armature (21) entre en prise dans une rainure longitudinale (66) de l'autre sous-élément d'armature (18).

8. Système d'étanchéité selon la revendication 7, **caractérisé en ce que** le bord longitudinal libre (65) est bloqué par conjugaison de forme dans la rainure longitudinale (66) au moyen d'un assemblage enclenché (67).

9. Système d'étanchéité selon la revendication 1, **caractérisé en ce que** les sous-éléments d'armature (18, 21) peuvent être posés l'un sur l'autre le long du joint de séparation (34) et peuvent être fixés l'un contre l'autre et contre l'élément de raccordement (36) par les éléments de fixation (57).

10. Système d'étanchéité selon l'une quelconque des revendications 1 à 9, **caractérisé en ce que** la face (39) comporte dans la zone d'au moins un de ses bords longitudinaux un ergot (40, 41) coopérant avec l'élément de raccordement (36).

11. Système d'étanchéité selon l'une quelconque des revendications 1 à 10, **caractérisé en ce que** les extrémités libres des lèvres d'étanchéité (42, 43) sont en appui sous précontrainte l'une contre l'autre lorsque la vitre (44) est située en dehors du système d'étanchéité (2; 12).

12. Système d'étanchéité selon l'une quelconque des revendications 1 à 11, **caractérisé en ce que** l'armature (25) comporte au moins une nervure de raidissement (53 ; 54 ; 55) dans la cavité (45) de sa section sensiblement en forme de U.

13. Système d'étanchéité selon la revendication 12, **caractérisé en ce que** ladite au moins une nervure de raidissement (53) est conçue sous forme de nervure longitudinale qui s'étend dans le sens longitudinal de l'armature (25).

14. Système d'étanchéité selon la revendication 12 ou 13, **caractérisé en ce que** les nervures de raidissement (54 ; 55) sont conçues sous forme de nervures transversales qui s'étendent dans le sens transversal de l'armature (25) et qui sont agencées à distance l'une de l'autre dans un sens longitudinal de l'armature (25).

15. Système d'étanchéité selon la revendication 14, **caractérisé en ce que** chaque nervure transversale (54 ; 55) s'étend depuis une branche (27 ; 28) de l'armature (25) jusqu'à une base (26) du sous-élément d'armature (18 ; 21) correspondant.
